(19) Europäisches Patentamt
European Patent Office
Office européen des brevets

(11) Publication number: **0 009 038**
**B1**

(12) # EUROPEAN PATENT SPECIFICATION

(45) Date of publication of patent specification: **30.06.82**

(51) Int. Cl.³: **B 01 D 53/34**, C 01 B 17/04

(21) Application number: **79900031.0**

(22) Date of filing: **05.01.79**

(86) International application number:
**PCT/GB79/00001**

(87) International publication number:
**WO 79/00516 09.08.79 Gazette 79/16**

(54) **Soluble compound of vanadium used in a method of removing hydrogen sulphide from a gas mixture.**

(30) Priority: **17.01.78 GB 185778**

(43) Date of publication of application:
**02.04.80 Bulletin 80/7**

(45) Publication of the grant of the patent:
**30.06.82 Bulletin 82/26**

(84) Designated Contracting States:
**DE FR LU**

(56) References cited:
**DE - B - 1 153 729**
**GB - A - 1 488 659**
**US - A - 4 002 727**
**US - A - 4 060 594**

**Zeitschrift für anorganische und allgemeine Chemie, "Band" 272, 1953, pages 81—110 Menzel & Müller, Editeur: Johann Ambrosius Barth, Leipzig**
**Comptes rendus de l'académie des Sciences de Paris, série C, tome 262, pages 478—479 (Chrétien et Lelong), éditeur Gauthier-Villars**
**Gmelins Handbuch der Anorgischen Chemie, System-Nummer 4, Teil B, Leiferung 2, (1967), pages 382—383, Verlag GmbH, Weinheim**

(73) Proprietor: **MUREX LIMITED**
**Hammersmith House**
**London W6 9DX (GB)**

(72) Inventor: **Couch, Christopher John**
**43 Clifton Road**
**Hornchurch, Essex (GB)**

(74) Representative: **Ben-Nathan, Laurence Albert et al,**
**c/o MICHAEL BURNSIDE & PARTNERS 2**
**Serjeants'Inn Fleet Street**
**London EC4Y 1HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 009 038 B1

Soluble compound of vanadium used in a method of removing hydrogen sulphide from a gas mixture

This invention relates to the use of a soluble compound of vanadium in gas purification.

In the well known Stretford process for removal of hydrogen sulphide from a gas mixture containing hydrogen sulphide, the gas mixture is washed with an alkaline aqueous solution (typically of sodium carbonate) so as to convert the hydrogen sulphide to (sodium) bisulphide. The bisulphide is then reacted with a soluble vanadium (V) compound which is dissolved in the aqueous solution. The bisulphide is consequently oxidised to sulphur, the vanadium being reduced to oxidation state IV. The vanadium is then reoxidised to oxidation state V by reaction with an oxidising agent which is also contained in the solution. The oxidising agent is of a kind which can be reoxidised by air or oxygen. The oxidising agent is typically anthraquinone 2, 7 disulphonic acid. Thus, continuous regeneration of vanadium in oxidation state V is made possible. Moreover, the hydrogen sulphide is converted to sulphur which may be readily collected as a vendible product.

In practice, the aqueous solution of vanadium (V) compound, alkali, and oxidising agent is prepared in a first vessel and then passed into a second vessel where it is contacted with the gas mixture. The resulting sulphur-containing mixture is returned to the first vessel where it is blown with air to reoxidise the vanadium, to regenerate the oxidising agent and also to help the sulphur to rise to the surface of the liquid in that vessel. The sulphur may be collected from the surface. Substantially all the hydrogen sulphide is removed from the gas mixture, which is simply passed through the second vessel.

Typically, a sequestering (or stabilising) agent such as sodium tartrate is included in the solution. Alternative oxidising agents to anthraquinone which also function as sequestering agents are known.

Vanadium (in oxidation state (V)) has been added in various forms to the alkaline liquor, for example:

1. As sodium metavanadate.
2. By dissolving commercial vanadium pentoxide in the alkaline liquor.
3. In the form of a soluble polyvanadate of sodium and ammonium.
4. As ammonium metavanadate.

Whichever of these forms of vanadium is used, there is a loss of vanadium from the liquor by progressive precipitation of an insoluble form of vanadium, which may contain vanadium in oxidation state IV. In addition, some forms such as vanadium pentoxide are found to be difficult to dissolve and if they can be dissolved, this can be done only slowly. In the art, this is considered to be an important disadvantage. A further disadvantage associated with vanadium pentoxide is that it generally contains some vanadium in oxidation stage IV (i.e. it contains some $V_2O_4$) which is inactive in the Stretford and analogous processes. In addition, ammonium is considered to be undesirable by many users of the Stretford process who consequently do not use ammonium metavanadate or ammonium polyvanadate.

There is thus a need for a new soluble compound of vanadium (V) for use in the Stretford process.

We have discovered that a soluble compound of vanadium of formula:

$$Na_3VO_4 \,.\, 1/4\ NaOH \,.\, 12\ H_2O$$

is surprisingly soluble in aqueous solution. Moreover, this compound is relatively stable in aqueous solution: the propensity of vanadium to come out of solution is relatively small. We have also found that the compound dissolves relatively quickly in water.

The existence of this compound is reported by Chretien and Lelong in Compt. Rend. Ser. C 262 (6), pp 478—479 (1966). It is also referred to in Gmelins Handbuch der Anorganischen Chemie, System-Nummer 48, Teil B — Lieferung 2 (1967), pp. 382—383, in which there is a reference to "Zeitschrift fur anorganische und allgemeine Chemie", 272, (1953) pp 81—110, Menzel & Muller. An X-ray diffraction study of the compound has been reported by E. Tillmans and W. H. Baur, Acta Crystallographica B27, pp 2124—2132 (1971), who found it hexagonal, space-group P3 c-1, a=b=12.038 Angstroms, c=12.833 Angstroms. The X-ray diffraction method is probably the best way of characterising the vanadium compound.

One characteristic of this vanadium compound that has been reported is a marked tendency for it to pick-up carbon dioxide from the atmosphere. It is believed that carbonate is formed, though, in general, an appreciable proportion of hydroxide remains. We have also found that the compound tends readily to give up at least some molecules of water of crystallisation on being heated. We have found that the compound is still very soluble even after pick-up of carbon dioxide and/or at least partial loss of its water of crystallisation.

No method of preparing this compound has, we believe, been reported.

According to the present invention, there is provided a method of removing hydrogen sulphide from a gas mixture containing hydrogen sulphide, including the steps of contacting the gas mixture with an aqueous alkaline solution to form bisulphide, dissolving a soluble compound of vanadium (V) in the solution, reacting the bisulphide with the soluble compound of vanadium (V) to form sulphur, the

vanadium being reduced to oxidation state IV, and reoxidising the vanadium to oxidation state V, wherein the soluble vanadium compound is:

$$Na_3VO_4 . 1/4\ NaOH . 12\ H_2O$$

or a product formed by driving off at least some of the molecules of water of crystallisation therefrom, and/or by the compound picking-up carbon dioxide.

The vanadium compound of formula:

$$Na_3VO_4 . 1/4\ NaOH . 12\ H_2O$$

may be prepared by a method in which at elevated temperature an aqueous solution containing 10 to 100 g/l of vanadium (in oxidation state V) has added to it sufficient sodium hydroxide to increase the mole ratio of Na to V in the solution to at least 3, preferably to at least 6, and most preferably to 6.5 to 6.7 and then the solution is cooled so as to form crystals of the compound of vanadium.

The solution may be of sodium metavanadate, or sodium orthovanadate or indeed any other compound of sodium, vanadium (V) and oxygen. The solution is preferably sodium vanadate liquor.

It may be prepared by methods well known in the art. For example, sodium vanadate liquor may be prepared in accordance with the common practice in the industry, by roasting or fusing low grade vanadium bearing materials with soda ash, caustic soda or sodium salts in oxidising atmosphere thereby converting the vanadium to sodium vanadate, and then extracting the so-formed sodium vanadate by leaching with water. The vanadate liquor preferably contains from 35 to 60 g/l of vanadium. We have found that with sodium vanadate liquor below a vanadium concentration of 35 g/l, the yield of the product decreases with decreasing vanadium concentration. Above a vanadium concentration of 60 g/l, we believe the magma of crystals which forms on cooling the liquor will be so dense that it will be difficult to handle. Typically, the sodium vanadate liquor contains from 2 to 4.5 moles of sodium for every mole of vanadium.

The elevated temperature is preferably at least 50°C, but is preferably below 100°C.

The sodium hydroxide is preferably added in solid form so as to avoid dilution of the vanadate liquor. Care should be taken to avoid excessive temperature rise during the addition of the alkali. It is desirable to dissolve the alkali as quickly as possible. Thus, the vanadate liquor is preferably stirred vigorously throughout the addition of the alkali. The amount of sodium hydroxide which needs to be added depends on how much sodium there is in the starting solution. Typically, the mole ratio of Na to V in the starting solution is in the order of 2:1 up to about 4.5:1 though it may frequently be in the order of 4:1 if the starting solution is sodium vanadate liquor. In these circumstances sufficient sodium hydroxide may be added to increase the mole ratio to at least 5:1, preferably to at least 5.5:1 and most preferably to 6:1 to 7:1.

As a result of dissolving the hydroxide in the vanadate liquor, a clear solution is generally formed. This solution is preferably passed through a fine "polishing" filter to remove any particles of impurity and thus ensure that there is a clear solution. The solution is then preferably allowed to cool, preferably to ambient temperature. Desirably, the solution is stirred during cooling. As the solution cools so a thick magma of fine crystals forms.

The crystals may be recovered by conventional means, such as filtration and centrifuging. As much of the mother liquid as possible is desirably removed during the recovery of the crystals in view of their relatively high solubility. It is also desirable not to wash the crystals with water or other aqueous medium. This is so as to avoid dissolving them.

The crystals may, if desired, be dried at a temperature in the order of 45°C. If desired, before drying, the crystals may be purified by recrystallisation from water. Little change in composition is found in the case of the sodium salt. Generally, there may be a reduction of one percent in the total sodium present.

The vanadium salt according to the invention is found empirically to have a composition (excluding water of crystallisation) as follows:

| | % by weight |
|---|---|
| Na | 34.50 |
| V | 23.52 |
| O | balance |

as determined by recrystallising to constant weight.

Typically, the vanadium salt forms trigonal crystals which appear white to the eye.

We believe that $Na_3VO_4 . 1/4NaOH . 12\ H_2O$ is more soluble than vanadium oxides and sodium salts of vanadium previously used in the Stretford process. In addition, we believe that at least this sodium salt of vanadium has a greater stability than sodium ammonium polyvanadate.

These advantages are illustrated below:

1. Solubility (in a g V/100 g solution)

TABLE 1

| | Ammonium metavanadate | | Fused $V_2O_5$ | | Sodium ammonium polyvanadate | | $Na_3VO_4$ . 1/4NaOH . 12 $H_2O$ | |
|---|---|---|---|---|---|---|---|---|
| Temp °C | 20 | 20 | 20 | 80 | 30 | 70 | 30 | 70 |
| Water | 0.25 | 1.29 | Insoluble | | 0.45 | 4.2 | 3.8 | 12.3 |
| Fresh Stretford Liquor | — | — | | | 0.18 | 2.1 | 5.2 | 12.8 |
| Spent Stretford Liquor | — | — | | | — | 1.5 | 2.0 | 9.0 |

From these results, it can be seen that under all the conditions examined, the vanadium compound used in accordance with the invention is considerably more soluble than any of the alternatives.

2. Stability

It has been reported that vanadium catalysts used in the Stretford process diminish in activity with time due, it is claimed, to precipitation of part of the vanadium, and some users believe this is related to the nature of the vanadium ionic species in solution.

Stability is usually tested by passing hydrogen sulphide gas, heavily diluted with nitrogen as an inert carrier gas, through freshly prepared Stretford liquor for several hours, and then sealing the vessel to exclude air. A stabiliser, typically tartaric acid, is present in the liquor (although citric acid may be used instead). After some lapse of time, say 1 to 4 weeks, the liquor is filtered and any insoluble vanadium is estimated by analysis. The following results have been obtained using this procedure. The results relate to a 2 litre solution containing 1.7 g/l.

TABLE 2

Insoluble Vanadium (g)

| | From sodium ammonium polyvanadate | $Na_3VO_4$ . 1/4NaOH . 12 $H_2O$ |
|---|---|---|
| 1 week | 0.303 | 0.572 |
| 2 weeks | 0.508 | 0.564 |
| 3 weeks | 0.615 | 0.447 |
| 4 weeks | 0.756 | 0.393 |

While the mechanism is not clear it seems that vanadium at first precipitated from the new vanadium compound according to the invention redissolved, whereas the commonly used polyvanadates show progressive precipitation.

We have also found there to be a marked improvement in stability when no stabiliser is present in the liquor.

Example 1

In this example, un-neutralised sodium vanadate liquor was used as a starting material.

Four litres of un-neutralised vanadate liquor containing, in total, 196 g (3.84 moles) of vanadium, and 374 g (16.25 moles) of sodium (mole ratio of Na:V 4.2:1) were heated to 60°C, the liquor being stirred during the heating.

The stirring was continued and 307.2 g of sodium hydroxide pellets were added gradually to the mixture. This increases the mole ratio of Na:V. The stirring was continued and the mixture allowed to cool to room temperature, filtered and sucked dry through a vacuum filter to give 1.733 kg of crude sodium salt of vanadium according to the invention.

The resulting crystals were then raised in temperature to 105°C so as to drive off all moisture. It was found that as a result of this process 51% by weight of the dry solid was lost, i.e. the solid contains approximately 51% by weight of uncombined water. It was found that the resultant solid contained 24.55% by weight of vanadium and 35.6% by weight of sodium. The filtrate was also subjected to

analysis to find out how much vanadium it contained. It was found that the filtrate contained 10.4 g/l of vanadium, the total volume of the filtrate being 2.72 l.

It is to be appreciated that the preceding analysis of the crude sodium salt of vanadium was performed on only a small portion of that compound. The remainder was dissolved in 1.5 litres of demineralised water at 80°C, filtered hot and cooled. The resulting crystals were sucked dry by means of a vacuum filter and it was found that 1.017 kg of crystals were obtained.

An analysis of these crystals was conducted. A sample was taken and heated to 105°C to drive off all the uncombined water. It was found that the crystals contained 54% by weight of water of crystallisation. An analysis of the anhydrous crystals showed that they contained 24.9% by weight of vanadium and 35.1% by weight of sodium. This corresponds within the confines of the standard experimental error to a formula of $Na_3VO_4 . 1/4NaOH . 12\ H_2O$.

The filtrate was found to contain 33 g/l of vanadium, and there was in total 1.51 litres of such filtrate.

The above results show that the yield of vanadium in the pure sodium compound according to the present invention was 59.8% by weight.

In order to verify that the compound prepared in a manner as described above is that reported in the literature under the formula $Na_3VO_4 . 1/4\ NaOH . 12\ H_2O$, a crystal of the substance was coated with UHU (Trade Mark) cement and mounted on a fibre. It was then subjected to an X-ray diffraction study. The crystal was stable for long enough for its cell dimensions to be deduced from oscillation and Weissenberg photographs. It was found that the substance crystallises in the hexagonal system with cell dimensions a=b=12.05 Angstroms and c=12.86 Angstroms. These results conform well to those obtained by Tillimans and Baur.

Example 2

A compound of vanadium having the formula $Na_3VO_4 . 1/4NaOH . 12\ H_2O$ was employed in the Stretford process on a pilot plant scale. The aqueous solution used to treat the gas mixture containing hydrogen sulphide contained sodium carbonate (as the alkali) and anthraquinone, 2,7-disulphonic acid (as the oxidising agent) at conventional concentrations.

In experiment A, sodium metavanadate was used as the vanadium compound. In addition, a sequestering agent (or stabilising agent as it is sometimes called) sodium tartrate is present in conventional quantities. (The sodium tartrate being formed *in situ* by addition to the solution of tartaric acid).

Experiment B involved the substitution of $Na_3VO_4 . 1/4NaOH . 12\ H_2O$ for the sodium metavanadate.

Experiment C involved the omission of the sequestering agent from the solution, which was otherwise identical to that used in Experiment B.

In each Experiment, the starting concentration of vanadium was 1.7 g per litre. In each Experiment, the solution was blown with air so as to regenerate the oxidising agent. Periodic additions of the vanadium compound were made to the solution so as to restore its vanadium content to 1.7 g/l. Similarly, in Experiments A and B, periodic additions of tartaric acid were made to replenish the tartrate.

In each Experiment the rate of loss of vanadium from solution was measured. In Experiments A and B, the rate of loss of the tartrate was also measured.

The results as shown in Table 3 below. It can be seen that significantly less vanadium is lost in Experiments B and C than in Experiment A. Moreover, the results obtained in Experiments B and C are roughly comparable with one another, indicating that the method of removing hydrogen sulphide makes it possible to perform the Stretford process efficiently without using a sequestering or stabilising agent for the vanadium.

TABLE 3

| Experiment | Rate of entry of $H_2S$ (in l/hr) | Hrs of Operation | Rate of loss of tartrate %/day | Rate of loss of V %/day |
|---|---|---|---|---|
| A | 4.4 | 145 | 6.3 | 15.7 |
| B | 3.8 | 167.5 | 7.6 | 8.6 |
| C | 3.8 | 263 | — | 7.9 |

## Claim

1. A method of removing hydrogen sulphide from a gas mixture containing hydrogen sulphide, including the steps of contacting the gas mixture with an aqueous alkaline solution to form bisulphide, dissolving a soluble compound of vanadium (V) in the solution, reacting the bisulphide with the soluble

compound of vanadium (V) to form sulphur, the vanadium being reduced to oxidation state IV and reoxidising the vanadium to oxidation state V, wherein the soluble vanadium compound is:

$$Na_3VO_4 . 1/4NaOH . 12\ H_2O$$

or a product formed by driving off at least some of the molecules of water of crystallisation from the compound, and/or by the compound picking up carbon dioxide.

**Patentansprüch**

1. Verfahren zur Entfernung von Wasserstoffsulfid aus einem wasserstoffsulfid-enhaltenden Gemisch, einschliesslich der folgenden Schritte: das Kontaktieren des Gasgemischs mit einer wässerigen Alkalilösung um Bisulfid zu bilden, das Lösen einer löslicher Vanad (V)-Verbindung in der Lösung, das Reagieren des Bisulfids mit der Vanad (V)-verbindung um Schwefel zu bilden, wobei das Vanad zum Oxydationszustand (IV) reduziert wird, und Reoxydieren des Vanads zum Oxydationszustand V, worin die lösliche Vanadverbindung entweder

$$Na_3VO_4 . 1/4NaOH . 12\ H_2O$$

oder ein Produkt ist das dadurch gebildet wird dass mindestens einige der Moleküle des Kristallisationswassers aus der Verbindung abgetrieben werden und/oder dass die Verbindung Kohlenstoffdioxyd aufnimmt.

**Revendication**

1. Une méthode pour expulser l'hydrogène sulfuré d'une mélange gazeuse qui contient de l'hydrogene sulfuré, laquelle méthode comprend les étapes de faire contacter la mélange gazeuse avec une solution alcaline aqueuse pour former du bisulfure, de faire dissoudre un composé soluble de vanadium (V) dans la solution, de faire reagir le bisulfure avec le composé soluble de vanadium (V) pour former du soufre, tout en reduisant le vanadium à l'état d'oxydation (IV) dans lequel le compose soluble de vanadium est ou

$$Na_3VO_4 . 1/4NaOH . 12\ H_2O$$

ou un produit qui est formé en expulsant, du composé, au moins quelques-unes des molécules de l'eau de cristallisation, et/ou en ce que le composé ramasse de l'oxide de carbone.